Europäisches Patentamt

(19) European Patent Office

Office européen des brevets

(11) Veröffentlichungsnummer : **0 052 324**
**B1**

(12) **EUROPÄISCHE PATENTSCHRIFT**

(45) Veröffentlichungstag der Patentschrift :
05.03.86

(51) Int. Cl.⁴ : **B 01 F 13/08**

(21) Anmeldenummer : **81109578.5**

(22) Anmeldetag : **09.11.81**

(54) **Magnet-Rühreinrichtung.**

(30) Priorität : **17.11.80 DE 3043335**
**07.03.81 DEU 8106555**
**10.09.81 DE 3135961**

(43) Veröffentlichungstag der Anmeldung :
**26.05.82 Patentblatt 82/21**

(45) Bekanntmachung des Hinweises auf die Patenterteilung : **05.03.86 Patentblatt 86/10**

(84) Benannte Vertragsstaaten :
**BE CH FR GB IT LI NL SE**

(56) Entgegenhaltungen :
**EP-A- 0 035 762**
**FR-A- 2 343 501**
**GB-A- 1 112 297**
**GB-A- 1 156 206**
**GB-A- 2 063 592**
**US-A- 3 680 843**
**US-A- 3 693 941**
**US-A- 4 199 265**

(73) Patentinhaber : **Herz, Helmut, Dipl.-Ing.**
**Bregenzerstrasse 68**
**D-8990 Lindau (DE)**

**Kaufmann, Klaus, Dipl.-Ing.**
**Schleissheimerstrasse 183c**
**D-8000 München 40 (DE)**

(72) Erfinder : **Herz, Helmut, Dipl.-Ing.**
**Bregenzerstrasse 68**
**D-8990 Lindau (DE)**
Erfinder : **Kaufmann, Klaus, Dipl.-Ing.**
**Schleissheimerstrasse 183c**
**D-8000 München 40 (DE)**

(74) Vertreter : **Dorner, Jörg, Dr.-Ing. et al**
**Dorner & Hufnagel Patentanwälte Ortnitstrasse 20**
**D-8000 München 81 (DE)**

EP 0 052 324 B1

## Beschreibung

Die Erfindung betrifft eine Magnet-Rühreinrichtung mit einer Basis, die zur Abstützung eines die jeweils zu rührende Flüssigkeit und einen magnetischen Rührstab enthaltenden Gefäßes dient und die eine Elektromagnetanordnung enthält, deren in mehreren Paaren einander gegenüberliegende Pole sich nahe der Oberseite der Basis befinden und deren Erregerwicklungen zur Erzeugung eines an den einzelnen Polen herrschenden Magnetfeldes veränderlicher Größe mit Strom beaufschlagbar sind, wobei die Pole eines Polpaares in Aufsicht mit Bezug auf ein gemeinsames Zentrum radial langgestreckte Polschuhe aufweisen, die mit ihrer Oberseite bündig in eine Abstützfläche der Basis liegende Oberflächenteile besitzen.

Aus der US-Patentschrift 4 199 265 sind Magnet-Rühreinrichtungen dieser Art bekannt. Ferner ist in der US-Patentschrift 3 693 941 eine Magnet-Rühreinrichtung ähnlicher Art beschrieben, bei der die Erregerwicklungen der Elektromagnetanordnung mit Stromimpulsen bestimmter Form und bestimmter gegenseitiger Phasenlage beaufschlagbar sind.

Bei den bekannten Magnet-Rühreinrichtungen ergibt sich die Schwierigkeit, daß die magnetischen Felder, welche mit dem magnetischen Rührstab in Wechselwirkung treten sollen, mitunter keinen stabilen Rührbetrieb ermöglichen, so daß es vorkommen kann, daß der in der Flüssigkeit befindliche magnetische Rührstab bei Einschaltung der Erregung der Magnetspulen seine Rotation nicht oder nur stark verzögert aufnimmt, zum Schlagen neigt oder wiederholt aus der Mitte läuft.

Die soeben beschriebenen Erscheinungen treten bei den bekannten Magnet-Rühreinrichtungen dann verstärkt auf, wenn die Größe des magnetischen Rührstabes nicht präzise auf die mit ihm zusammenwirkende Elektromagnetanordnung abgestimmt ist.

Durch die Erfindung soll die Aufgabe gelöst werden, eine Magnet-Rühreinrichtung der eingangs kurz beschriebenen Art so auszugestalten, daß mit Rührstäben verschiedener Länge jeweils in gleicher Weise ein stabiler Betrieb ermöglicht wird und eine zuverlässige Zentrierung des Rührstabes innerhalb des die zu rührende Flüssigkeit enthaltenden Gefäßes bei Aufnahme des Betriebes und während des Betriebes erreicht wird.

Diese Aufgabe wird erfindungsgemäß dadurch gelöst, daß die Polschuhe von ihrer jeweiligen Verbindungsstelle zu den Polen aus nach aufwärts gekröpft ausgebildet sind, wobei die radial inneren Polschuhabschnitte im wesentlichen in einer Ebene mit der Abstützfläche liegen, während die mit den Polen verbundenen, radial außenliegenden Polschuhabschnitte in größerem Vertikalabstand unter der Abstützfläche gelegen sind.

Hierdurch wird erreicht, daß die von den Magnetspulenpolen ausgehenden Streufelder vergleichsweise hoher Intensität in geringerem Maße auf die Rührstabenden Einfluß nehmen. Die Magnetspulenpole sind hierzu gegenüber der Abstellfläche der Basis zurückgesetzt, während die radial inneren Polschuhabschnitte ein zentrales Drehfeld hoher Intensität erzeugen, welches mit dem Rührstab in Wechselwirkung tritt und den Rührstab zentriert.

Es versteht sich, daß das hier angegebene Konstruktionsprinzip auch auf Magnet-Rühreinrichtungen anwendbar ist, welche mit mehreren Rührstellen ausgerüstet sind, wobei Gruppen von Polschuhen jeweils eine Rührstelle bestimmen und umgeben und bestimmte Polschuhe auch jeweils anderen Rührstellen gleichzeitig angehören können. Das bedeutet, daß die Polschuhe beispielsweise in einem Quadratraster gruppiert sind, dessen Überkreuzungsstellen jeweils die Rührstellen bilden.

Gemäß einer vorteilhaften Ausgestaltung der hier beschriebenen Magnet-Rühreinrichtung überdecken die in der Ebene der Basisoberseite gelegenen Oberflächenteile der Polschuhe diese Basisoberseite bis auf vergleichsweise schmale Spalträume zwischen den Polschuhen. Dies führt zu einer weiteren Verstärkung der Zentrierungswirkung des zentralen Drehfeldes im Bereich einer Rührstelle.

Die Polschuhe können in Kunststoff eingebettet sein, wobei die Polschuhoberflächen und die Kunststoffüllung der soeben genannten Spalträume in der Abstützfläche der Basis fluchten. Insbesondere kann die gesamte Basis in Kunststoff eingegossen sein.

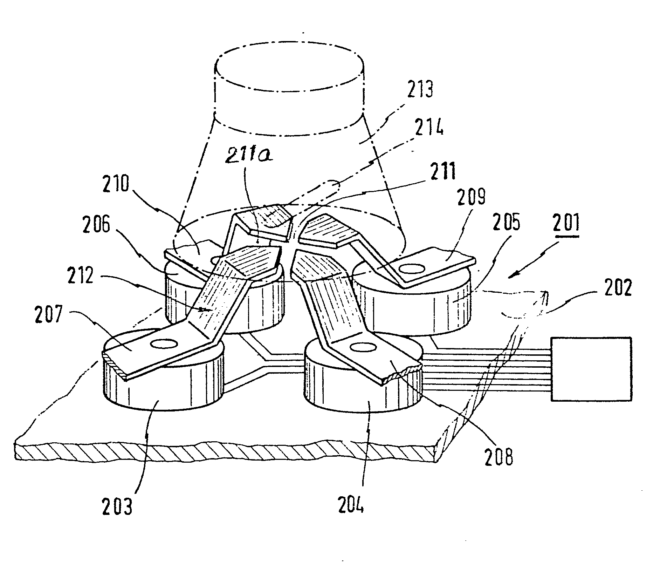

Nachfolgend wird ein Ausführungsbeispiel anhand der Zeichnung beschrieben, welche eine perspektivische, schematische Abbildung einer Magnet-Rühreinrichtung im Ausschnitt unter Weglassung von Gehäuseteilen wiedergibt.

Die in der Zeichnung dargestellte Magnet-Rühreinrichtung enthält eine Basis 201, welche in einem nicht dargestellten Gehäuse untergebracht ist und welche, was ebenfalls nicht dargestellt ist, beispielsweise in Gießharz eingegossen sein kann. Die Basis weist eine Jochplatte 202 auf, auf der Magnetspulen 203, 204, 205 und 206 montiert sind. Die Kerne der Magnetspulen 203 bis 206 sind einerseits an der Jochplatte 202 befestigt und haben andererseits Verbindung mit Polschuhen 207 bzw. 208 bzw. 209 bzw. 210, welche mit Bezug auf ein gemeinsames Zentrum bzw. das Zentrum 211 der betreffenden Abstellfläche radial langgestreckt sind. Die Polschuhe 207 bis 210 sind von ihrer jeweiligen Verbindungsstelle zu den Magnetspulenpolen aus nach aufwärts gekröpft ausgebildet, wie bei 212 deutlich gemacht ist. Die radial inneren Polschuhabschnitte liegen demgemäß im wesentlichen in einer Ebene mit der Abstellfläche zum Aufsetzen eines strichpunktiert angegebenen Gefäßes 213 mit einem darin befindlichen Rührstab 214, während die mit den Magnetspulenpolen verbundenen Polschuhabschnitte, also die radial äußeren Polschuhteile in größerem Vertikalabstand unter der Abstellfläche gelegen sind.

Die Polschuhe haben im Bereich ihrer radial inneren Enden keilförmige Gestalt, so daß hier zwischen den Polschuhen nur vergleichsweise schmale, bei 211a angedeutete Zwischenräume vorgesehen sind.

Abschließend sei bemerkt, daß die gezeigte Ausführungsform selbstverständlich nur stark schematisiert wiedergegeben ist. Die Erregung der Magnetspulen 203 bis 206 durch eine in der Zeichnung als Blocksymbol angegebene Stromquelle erfolgt derart, daß in der Abstellfläche der Basis 201 in an sich bekannter Weise ein magnetisches Drehfeld mit in der Ebene dieser Abstellfläche rotierendem Vektor erzeugt wird. Sind weitere Gruppen von Magnetspulen und Polschuhen vorgesehen, wobei bestimmte Magnetspulen und bestimmte Polschuhe mehreren Gruppen gemeinsam angehören können, so ergeben sich bei einer entsprechenden Vergrößerung der Basis mehrere Rührstellen zum gleichzeitigen Betrieb mehrerer Rührstäbe in einer entsprechenden Anzahl von Gefäßen. Aus diesem Grunde sind in der Zeichnung die Jochplatte 202 und die radial äußeren Enden der Polschuhe abgebrochen bzw. abgeschnitten dargestellt.

## Patentansprüche

1. Magnet-Rühreinrichtung mit einer Basis, die zur Abstützung eines die jeweils zu rührende Flüssigkeit und einen magnetischen Rührstab (214) enthaltenden Gefäßes (213) dient und die eine Elektromagnetanordnung enthält, deren in mehreren Paaren einander gegenüberliegende Pole sich nahe der Oberseite der Basis befinden und deren Erregerwicklungen (203, 204, 205, 206) zur Erzeugung eines an den einzelnen Polen herrschenden Magnetfeldes veränderlicher Größe mit Strom beaufschlagbar sind, wobei die Pole eines Polpaares in Aufsicht mit Bezug auf ein gemeinsames Zentrum radial langgestreckte Polschuhe (207, 208, 209, 210) aufweisen, die mit ihrer Oberseite bündig in einer Abstützfläche der Basis liegende Oberflächenteile besitzen, dadurch gekennzeichnet, daß die Polschuhe (207, 208, 209, 210) von ihrer jeweiligen Verbindungsstelle zu den Polen aus nach aufwärts gekröpft (bei 212) ausgebildet sind, wobei die radial inneren Polschuhabschnitte im wesentlichen in einer Ebene mit der Abstützfläche liegen, während die mit den Polen verbundenen, radial außenliegenden Polschuhabschnitte in größerem Vertikalabstand unter der Abstützfläche gelegen sind.

2. Magnet-Rühreinrichtung nach Anspruch 1, dadurch gekennzeichnet, daß die in der Ebene der Basisoberseite gelegenen Oberflächenteile der Polschuhe (207, 208, 209, 210) diese Basisoberseite bis auf vergleichsweise schmale Spalträume (211a) zwischen den Polschuhen (207, 208, 209, 210) überdecken.

3. Einrichtung nach Anspruch 2, dadurch gekennzeichnet, daß mindestens die Polschuhe (207, 208, 209, 210) in Kunststoff eingebettet sind, wobei die Polschuhoberflächen und die Kunststoffüllung der Spalträume (211a) in der Abstützfläche fluchten.

4. Einrichtung nach Anspruch 3, dadurch gekennzeichnet, daß die gesamte Basis in Kunststoff eingegossen ist.

5. Einrichtung nach einem der Ansprüche 1 bis 4, dadurch gekennzeichnet, daß die Basis zur Abstützung weiterer, jeweils zu rührende Flüssigkeit und einen magnetischen Rührstab enthaltender Gefäße dient und weitere der genannten Elektromagnetanordnung entsprechende Elektromagnetanordnungen enthält, wobei bestimmte Erregerwicklungen und bestimmte Polschuhe (207, 208, 209, 210) mehreren Elektromagnetanordnungen gemeinsam angehören.

## Claims

1. Magnetic stirring device with a base which serves to support a vessel (213) containing the liquid to be stirred in a particular case and a magnetic stirring rod (214) and which embodies an electromagnet arrangement whose poles are disposed opposite each other in several pairs near the upper side of the base and to whose excitation coils (203, 204, 205, 206) for generating a magnetic field of variable magnitude prevailing at the individual poles current can be applied, the poles of a pole pair having in plan view, with respect to a common centre, radially longitudinally extended pole shoes (207, 208, 209, 210) which possess surface parts whose upper surface lies flush with a support surface of the base, characterised in that the pole shoes (207, 208, 209, 210) are constructed so as to bend upwards (at 212) from their respective point of junction with the poles, the radially inner pole shoe sections lying substantially in one plane with the support surface, while the pole shoe sections lying radially outside and joined to the poles are situated at a larger vertical distance below the support surface.

2. Magnetic stirring device according to Claim 1, characterised in that the surface parts of the pole shoes (207, 208, 209, 210) situated in the plane of the upper side of the base occupy this upper surface of the base except for comparatively narrow gaps (211a) between the pole shoes (207, 208, 209, 210).

3. Device according to Claim 2, characterised in that at least the pole shoes (207, 208, 209, 210) are embedded in plastic, the pole shoe surfaces and the plastic filling of the gaps (211a) in the support surface being flush.

4. Device according to Claim 3, characterised in that the entire base is cast in plastic.

5. Device according to one of the Claims 1 to 4, characterised in that the base serves to support additional vessels containing liquid to be stirred in a particular case and a magnetic stirring rod and embodies additional electromagnet arrangements similar to the said electromagnet arrangement, certain excitation coils and certain pole shoes (207, 208, 209, 210) belonging jointly to several electromagnet arrangements.

## Revendications

1. Agitateur magnétique avec une base servant à supporter un récipient (213) contenant le liquide à agiter et un barreau d'agitateur magnétique (214) et comportant un dispositif électromagnétique dont les pôles opposés les uns aux autres sont groupés en nombreuses paires, à proximité de la face supérieure de la base et dont les enroulements d'excitation (203, 204, 205, 206) peuvent être parcourus par un courant d'intensité variable pour engendrer un champ magnétique existant à chacun des différents pôles, les pôles d'une paire de pôles en vue par le dessus présentant des pièces polaires (207, 208, 209, 210) disposées radialement par rapport à un centre commun, qui possèdent des parties de surface situées avec leur face supérieure à fleur avec la surface d'appui de la base, caractérisé en ce que les pièces polaires (207, 208, 209, 210) sont recourbées vers le haut (en 212) depuis leurs points de jonction respectifs avec les pôles, les sections de pièces polaires radialement intérieures étant situées essentiellement dans le même plan que la surface d'appui, tandis que les sections de pièces polaires radialement extérieures et reliées aux pôles sont situées à une plus grande distance verticale sous la surface d'appui.

2. Agitateur magnétique selon la revendication 1, caractérisé en ce que les parties de surface des pièces polaires (207, 208, 209, 210) situées dans le plan de la face supérieure de la base, recouvrent cette face supérieure de la base, à l'exception d'intervalles (211a) relativement étroits entre les pièces polaires (207, 208, 209, 210).

3. Agitateur selon la revendication 2, caractérisé en ce qu'au moins les pièces polaires (207, 208, 209, 210) sont enrobées dans une matière plastique, les surfaces supérieures des pièces polaires et le remplissage en plastique des intervalles (211a) affleurant la surface d'appui.

4. Agitateur selon la revendication 3, caractérisé en ce que l'ensemble de la base est enrobé dans une matière plastique.

5. Agitateur selon l'une quelconque des revendications 1 à 4, caractérisé en ce que la base sert à supporter d'autres récipients contenant un liquide à agiter et un barreau d'agitateur magnétique et d'autres dispositifs électromagnétiques correspondant au dispositif électromagnétique mentionné, certains enroulements d'excitation et certaines pièces polaires (207, 208, 209, 210) appartenant en commun à plusieurs dispositifs électromagnétiques.